# EUROPEAN PATENT SPECIFICATION

(11) **EP 2 633 473 B1**
(45) Date of publication and mention of the grant of the patent: **05.08.2020**
(21) Application number: 11770285.2
(22) Date of filing: 30.09.2011
(51) Int. Cl.: G06K 7/14

(54) **METHOD AND APPARATUS FOR CAPTURING FORM DOCUMENT WITH IMAGING SCANNER**
VERFAHREN UND VORRICHTUNG ZUR ERFASSUNG EINES FORMDOKUMENTS MIT EINEM BILDGEBUNGSSCANNER
PROCÉDÉ ET APPAREIL DE CAPTURE DE DOCUMENT DE FORMULAIRE AVEC UN SCANNER D'IMAGERIE

(30) Priority: 27.10.2010 US 912831
(43) Date of publication of application: 04.09.2013
(73) Proprietor: Symbol Technologies, LLC, Holtsville, NY 11742 (US)
(72) Inventor: HE, Duanfeng, South Setauket New York 11720 (US); SHETH, Maulin S., Raritan New Jersey 08869 (US)
(74) Representative: LKGLOBAL Lorenz & Kopf PartG mbB Patentanwälte
(86) International application number: PCT/US2011/054220
(87) International publication number: WO 2012/057962

(56) References cited:
- WO-A2-2004/066186
- US-A1- 2003 116 628

## Description

### FIELD OF THE DISCLOSURE

The present disclosure relates generally to imaging-based barcode scanners.

### BACKGROUND

Various electro-optical systems have been developed for reading optical indicia, such as barcodes. A barcode is a coded pattern of graphical indicia comprised of a series of bars and spaces of varying widths. In a barcode, the bars and spaces having differing light reflecting characteristics. Some of the barcodes have a one-dimensional structure in which bars and spaces are spaced apart in one direction to form a row of patterns. Examples of one-dimensional barcodes include Uniform Product Code (UPC), which is typically used in retail store sales. Some of the barcodes have a two-dimensional structure in which multiple rows of bar and space patterns are vertically stacked to form a single barcode. Examples of two-dimensional barcodes include Code 49 and PDF417.

Systems that use one or more solid-state imagers for reading and decoding barcodes are typically referred to as imaging-based barcode readers, imaging scanners, or imaging readers. A solid-state imager generally includes a plurality of photosensitive elements or pixels aligned in one or more arrays. Examples of solid-state imagers include charged coupled devices (CCD) or complementary metal oxide semiconductor (CMOS) imaging chips.

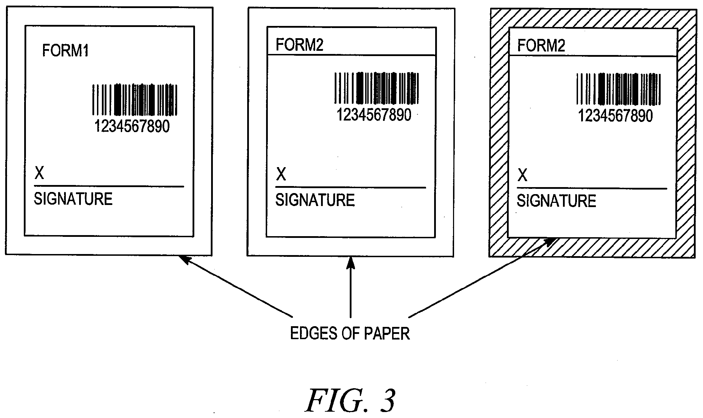

The imaging scanners are often used to capture various kinds of documents. For example, FIG. 3 shows three kinds of exemplary forms that can be captured by the imaging scanners. The first (Form 1) is a form where a barcode is generally in a white area, and the white area is continuous (other than in isolated places where there are graphic or textual elements) until a black border. The second (Form 2) is a form where in one or more sides (up to 4) the barcode is bound by a black line, and the line itself is not a border line; on the other hand, this black line is connected to the border, either directly or indirectly. The third (Form 3) is a form that does not have a border line. In this case it is assumed that the document capture should be performed on the complete piece of paper, and there is a background color different from (usually darker than) the form's color.

Because there are different kinds of forms that an imaging scanner can capture, some of the existing imaging scanners require the user to input a set of parameters associated with the form that is to be captured. These parameters can be used by an imaging scanner to determine the (x, y) offset of the center of the form, as well as the width and height of the form, with regard to an anchoring barcode. Programming the parameters generally can be tedious and error prone. When the parameters are wrong, such as in the case with parameters for a different form, the document capture would not be successful. Furthermore, these parameters in aggregate can only specify one single form format, and a scanner programmed with these cannot decode a form with different format.

In some other implementations for document capture, a document is put on a background object with different and uniform color. The edge of the document is found through this color contrast and document capture is performed with this info. The problem with this method is that when used alone it does not allow capturing a document in all situations, such as when there is no uniform and continuous background available.

WO2004/0066186 A2 discloses a method for identifying and compensating a perspective deformation in an image of a flat, two-dimensional, rectangular code field.

It is desirable to be able to capture a document without requiring any parameters that must be preset for the form (or document). It is also desirable to be able to capture different types of forms, with or without a uniform background, without having to select different modes of operation. It may be necessary to remove capture imperfections such as skew and uneven illumination that are commonly present in the form captured by the imaging scanner.

### SUMMARY

The invention relates to a method according to claim 1 and an apparatus according to claim 7. Preferred embodiments are defined in the dependent claims 2-6 and 8-11.

Implementations of the invention can include one or more of the following advantages. Different kinds of form documents can be captured with an imagining scanner without the need to first enter a set of parameters associated to the kind of the form to be captured. Imperfections such as skew and uneven illumination in the captured image of the form can be subject to certain corrections automatically. These and other advantages of the present invention will become apparent to those skilled in the art upon a reading of the following specification of the invention and a study of the several figures of the drawings.

### BRIEF DESCRIPTION OF THE FIGURES

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 shows an imaging scanner in accordance with some embodiments.
FIG. 2 is a schematic of an imaging scanner in accordance with some embodiments.
FIG. 3 shows three kinds of exemplary forms that can be captured by the imaging scanners.
FIG. 4A shows a captured digital image of the form 2 in FIG. 3 in accordance with some embodiments.
FIG.4B shows an improved image of the form in FIG. 4A after a reference box bounding the barcode is transformed into a rectangle in accordance with some embodiments.
FIG. 5 is a flowchart of a method for decoding the barcode in a form captured by an imaging scanner in accordance with some embodiments.
FIG. 6 is a flowchart that shows the process of block 220 in FIG. 5 with more details in accordance with some embodiments.
FIG. 7 depicts some exemplary "parallel" lines, not forming part of the invention, used in an algorithm for finding the reference box for correcting imaging distortions.
FIG. 8 depicts some exemplary connected-components, not forming part of the invention, used in an algorithm for finding the reference box for correcting imaging distortions.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

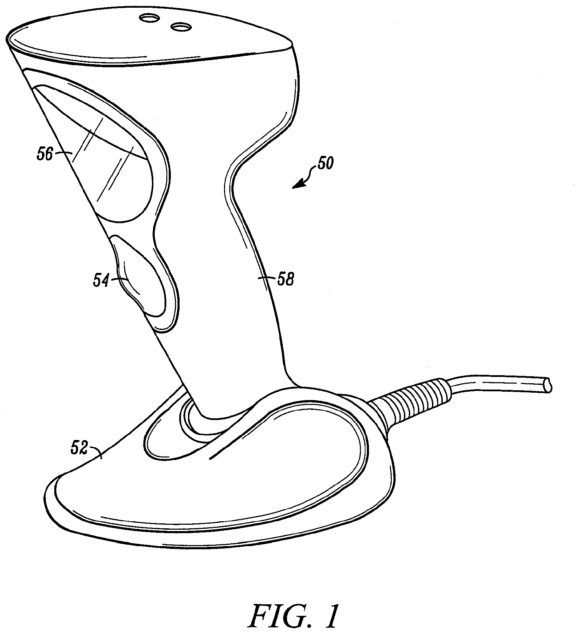

FIG. 1 shows an imaging scanner 50 in accordance with some embodiments. The imaging scanner 50 has a window 56 and a housing 58 with a handle. The imaging scanner 50 also has a base 52 for supporting itself on a countertop. The imaging scanner 50 can be used in a hands-free mode as a stationary workstation when it is placed on the countertop. The imaging scanner 50 can also be used in a handheld mode when it is picked up off the countertop and held in an operator's hand. In the hands-free mode, products can be slid, swiped past, or presented to the window 56. In the handheld mode, the imaging scanner 50 can be moved towards a barcode on a product, and a trigger 54 can be manually depressed to initiate imaging of the barcode. In some implementations, the base 52 can be omitted, and the housing 58 can also be in other shapes. In FIG. 1, a cable is also connected to the base 52. In other implementations, when the cable connected to the base 52 is omitted, the imaging scanner 50 can be powered by an on-board battery and it can communicate with a remote host by a wireless link.

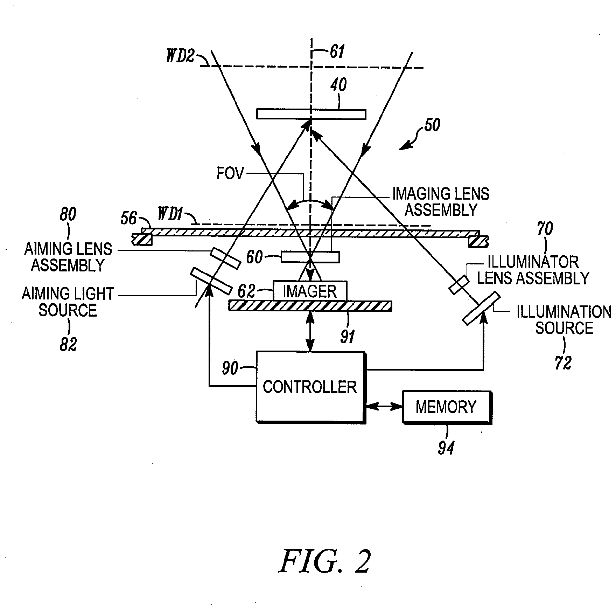

FIG. 2 is a schematic of an imaging scanner 50 in accordance with some embodiments. The imaging scanner 50 in FIG. 2 includes the following components: (1) a solid-state imager 62 positioned behind an imaging lens assembly 60; (2) an illuminating lens assembly 70 positioned in front of an illumination source 72; (3) an aiming lens assembly 80 positioned in front of an aiming light source 82; and (4) a controller 90. In FIG. 2, the imaging lens assembly 60, the illuminating lens assembly 70, and the aiming lens assembly 80 are positioned behind the window 56. The solid-state imager 62 is mounted on a printed circuit board 91 in the imaging scanner.

The solid-state imager 62 can be a CCD or a CMOS imaging device. The solid-state imager 62 generally includes multiple pixel elements. These multiple pixel elements can be formed by a one-dimensional array of photosensitive elements arranged linearly in a single row. These multiple pixel elements can also be formed by a two-dimensional array of photosensitive elements arranged in mutually orthogonal rows and columns. The solid-state imager 62 is operative to detect light captured by an imaging lens assembly 60 along an optical axis 61 through the window 56. Generally, the solid-state imager 62 and the imaging lens assembly 60 are designed to operate together for capturing light scattered or reflected from a barcode 40 as pixel data over a two-dimensional field of view (FOV).

The barcode 40 generally can be located anywhere in a working range of distances between a close-in working distance (WD1) and a far-out working distance (WD2). In one specific implementation, WD1 is about a few inches from the window 56, and WD2 is about a few feet from the window 56. Some of the imaging scanners can include a range finding system for measuring the distance between the barcode 40 and the imaging lens assembly 60. Some of the imaging scanners can include an auto-focus system to enable a barcode be more clearly imaged with the solid-state imager 62 based on the measured distance of this barcode. In some implementations of the auto-focus system, the focus length of the imaging lens assembly 60 is adjusted based on the measured distance of the barcode. In some other implementations of the auto-focus system, the distance between the imaging lens assembly 60 and the solid-state imager 62 is adjusted based on the measured distance of the barcode.

In FIG. 2, the illuminating lens assembly 70 and the illumination source 72 are designed to operate together for generating an illuminating light towards the barcode 40 during an illumination time period. The illumination source 72 can include one or more light emitting diodes (LED). The illumination source 72 can also include a laser or other kind of light sources. The aiming lens assembly 80 and the aiming light source 82 are designed to operate together for generating a visible aiming light pattern towards the barcode 40. Such aiming pattern can be used by the operator to accurately aim the imaging scanner at the barcode. The aiming light source 82 can include one or more light emitting diodes (LED). The aiming light source 82 can also include a laser or other kind of light sources.

In FIG. 2, the controller 90, such as a microprocessor, is operatively connected to the solid-state imager 62, the illumination source 72, and the aiming light source 82 for controlling the operation of these components. The controller 90 can also be used to control other devices in the imaging scanner. The imaging scanner 50 includes a memory 94 that can be accessible by the controller 90 for storing and retrieving data. In many embodiments, the controller 90 also includes a decoder for decoding one or more barcodes that are within the field of view (FOV) of the imaging scanner 50. In some implementations, the barcode 40 can be decoded by digitally processing a captured image of the barcode with a microprocessor.

In operation, in accordance with some embodiments, the controller 90 sends a command signal to energize the illumination source 72 for a predetermined illumination time period. The controller 90 then exposes the solid-state imager 62 to capture an image of the barcode 40. The captured image of the barcode 40 is transferred to the controller 90 as pixel data. Such pixel data is digitally processed by the decoder in the controller 90 to decode the barcode. The information obtained from decoding the barcode 40 is then stored in the memory 94 or sent to other devices for further processing.

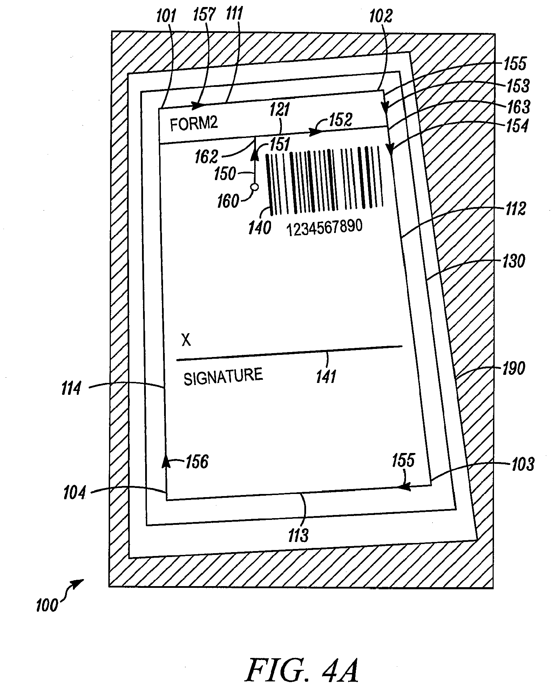

When a form document is captured by an imaging scanner 50, the form as it appears in the captured digital image sometimes can be tilted, skewed, and distorted. As an example, FIG. 4A shows a captured digital image 100 of the form 2 in FIG. 3. Apparently, the form image in the captured digital image 100 is no longer rectangular in shape. It is often necessary to remove the capture imperfections in captured digital image 100 before the barcode image 140 is further processed and decoded.

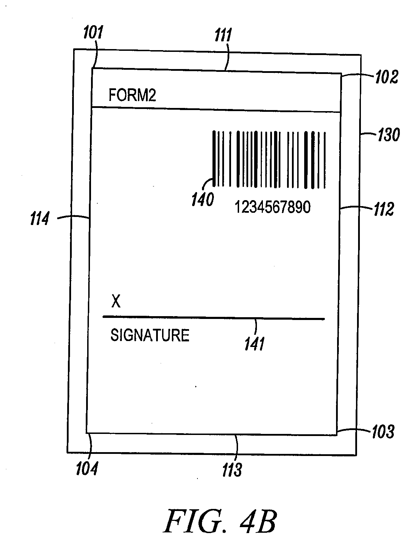

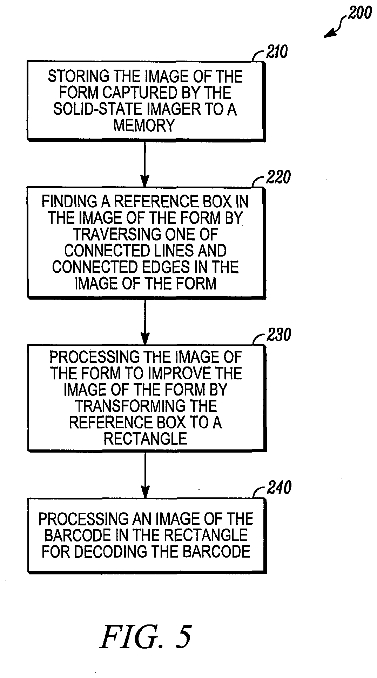

FIG. 5 is a flowchart of a method 100 for decoding the barcode in a form captured by an imaging scanner in accordance with some embodiments. The method 100 includes blocks 210, 220, 230, and 240. At block 210, the image of the form captured by the solid-state imager is stored to a memory. At block 220, one of connected lines and connected edges in the image of the form are traversed to find a reference box in the image of the form. At block 230, with a process in which the reference box is transformed into a rectangle, the image of the form is improved. In one example, in the captured digital image 100 of FIG. 4A, a reference box bounded by lines 111, 112, 113, and 114 (with corner points 101, 102, 103, and 104) is transformed into a rectangle in FIG.4B, which is also bounded by lines 111, 112, 113, and 114 (with corner points 101, 102, 103, and 104). At block 240, after the image of the form is improved, the image of the barcode is decoded. In one example, after the reference box in FIG. 4A bounded by lines 111, 112, 113, and 114 is transformed into a rectangle in FIG.4B, the image of the barcode 140 can be decoded.

FIG. 4A also depicts an exemplary process of block 220, in which one of connected lines and connected edges in the image of the form 100 are traversed to find a reference box in the image of the form. As shown in FIG. 4A, after a barcode candidate 140 in the image of the form 100 is identified, a position in the neighborhood of the barcode candidate is selected as a start position 160 for a tracer. Beginning from the start position 160, the tracer 151 moves along a line 150 until it encounters line 121. Based on a direction-scan algorithm, the tracer will make a right turn and continue to move along line 121 as tracer 152. When tracer 152 moves to line 112 that encounters line 121, based on the direction-scan algorithm, the tracer again will make a right turn at a position 163 and continue to move along line 112 as tracer 154. Similarly, based on the direction-scan algorithm, the tracer continue to traverse line 113 as tracer 155, traverse line 114 as tracer 156, traverse line 111 as tracer 157, and traverse line 112 as tracer 153, until the tracer return to the position 163 that has been previously traced by the tracer.

In FIG. 4A, the direction-scan algorithm determines the direction of travel whenever the tracer moves to a position where it encounters a new line. With the direction-scan algorithm, it first determines whether the position where it encounters the new line is the most "upper right" point since the beginning of the traverse by the tracer. If such position is the most "upper right" point, the algorithm start to search the new direction for travel by scanning a direction clock-wise beginning from the up direction of the image and ending the search when the new direction for travel is found. If such position is not the most "upper right" point, the algorithm start to search the new direction for travel by scanning a direction clock-wise beginning from the 9 o'clock direction relative to the tracer's current direction of travel. In the example as shown in FIG. 4A, at the point 163 where line 121 meets line 112, the search starts from the "up" direction, because the last point was the most "upper right" point to this moment. The algorithm starts from this direction, scans around to the right, and finds the first "border" point on the lower part of the line 112. It can be easily verified that the same algorithm will trance a straight line, and will turn right when the border line turns right. But when line 114 meets 121, the tracer did not happen to start from a new "upper right" point. Consequently it scans from the 9 o'clock direction in relationship to its current movement, and finds the next point to travel in the upper part of line 114, instead of the line 121.

FIG. 4A, once the closed area bounded by the straight lines 111, 112, 113, and 114 is found, it is evaluated to determine whether this closed area represents a rectangle (optionally with perspective distortion), and whether the rectangle is sufficiently large. A contour could be a random shape instead of a rectangle, if it is the outline of a block of text, for example. A contour could be a very small rectangle if it is the outline of a single bar of a barcode, or the check-box of an item on the form, for example. If the area enclosed by the contour is in the form of a rectangle with perspective distortion and is sufficiently large, then, it is selected as a reference box. After this reference box bounded by lines 111, 112, 113, and 114 is transformed into a rectangle in FIG.4B, the improved image of the barcode 140 in FIG.4B can be decoded.

In the implementation as illustrated in FIG. 4B, the tracer has been consistently making a right turn whenever the tracer moves to a position where the line on which it moves along encounters a new line, because the direction-scan algorithm searches the new direction for travel by scanning a direction clock-wise. In an alternative implementation, the direction-scan algorithm can also searches the new direction for travel by scanning a direction counter-clock-wise, and people skilled in the art can easily make the necessary modifications of the clock-wise search algorithm to come up with the new counter-clock-wise search algorithm.

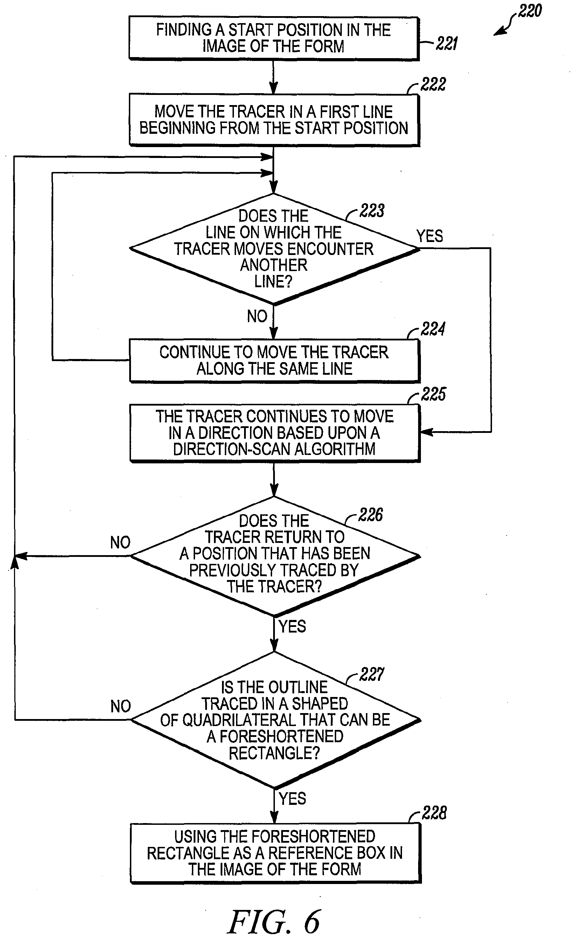

FIG. 6 is a flowchart that shows the process of block 220 in more details. The process of block 220 includes blocks 221, 222, 223, 224, 225, 226, 227, and 228. At block 221, a start position in the image of the form is found. At block 222, the tracer moves in a first line beginning from the start position. At block r223, it is determined whether the line on which the tracer moves encounters another line. If it does not encounter another line, at block 224, the tracer continues to move along the same line; but if it encounters another line, at block 225, the tracer continues to move in a direction based upon a direction-scan algorithm. At block 226, it is determined whether the tracer returns to a position that has been previously traced by the tracer. If the tracer returns to a previous position, at block 227, it is determined whether the outline traced is in a shape of quadrilateral that can be a foreshortened rectangle. If the answer to the question at block 227 is affirmative, at block 228, the outline traced will be used as a reference box in further signal processing; otherwise, the tracer continues to traverse the lines in the form. In some implementations, the questions at block 227 also include (a) "Is the rectangle large enough?" and/or (b) "Does the quadrilateral enclose the starting point?" In such implementation, the outline traced will be used as a reference box in further signal processing, only if the answers to the questions at block 227 are all affirmative.

The process of block 220 allows the imaging scanner to determine the type of the forms. For example, the process of block 220 may start from the neighborhood of the barcode, and gets an outside contour of the background area. From the contour, analysis is done to determine if there is a border line around itif there is not, the contour itself represents the edge of the form (Form 3). If there is a border line, a contour trace of the outside border of the line is performed. The outer contour thus generated is taken as the boundary of the form (Form 1 or 2).

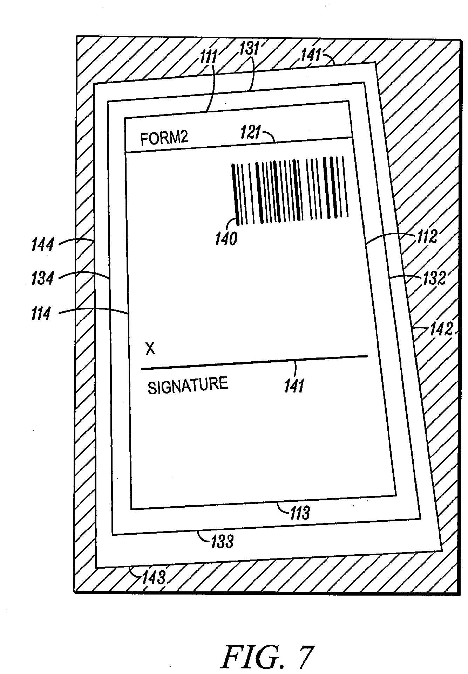

In addition to the flowchart as shown in FIG. 6, there are also other algorithms which do not form part of the invention, for finding the reference box for correcting imaging distortions. With one such algorithm, all lines which are "parallel" to the barcode bounding box can be first searched with a microprocessor, where the word "parallel" is understood to take into account of the foreshortening as predicted by the barcode bounding box. Once we have this set of lines, or a subset of it, we can use line- or contour-tracing algorithm to find the reference box. In one example, as shown in FIG. 7, the first set of "parallel" lines can include line 131, line 111, line 121, line 141, line 113, line 133, and line 143, while the second set of "parallel" lines can include line 142, line 132, line 112, line 114, line 134, and line 144.

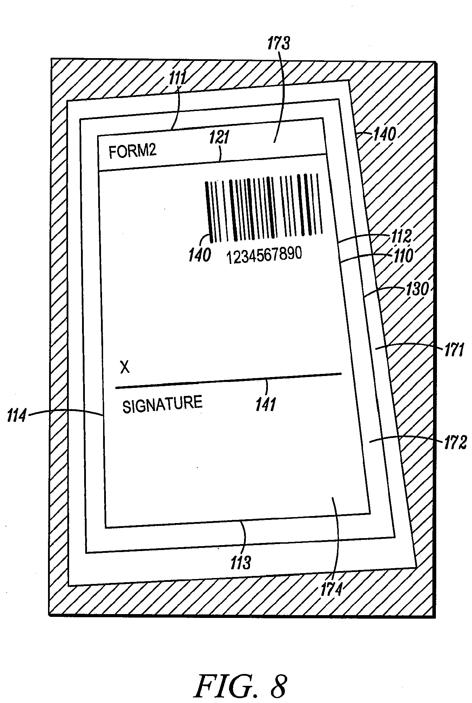

One of the other algorithms which do not form part of the invention, for finding the reference box involves connected-component analysis. With this algorithm, the background (white part) in the form is first found by a microprocessor. Note that the background around the barcode may not be connected with the complete background area, due to possible segmentation of the background by some lines in the form design (e.g. Form 2). However, if we then follow the lines surrounding this background area to find an outside contour, we should be able to arrive at the border. If we find that, at least on one side, there is no line separating this background from the rest of the image, we can conclude that the form is the type like Form 3, bounded by the edge of a piece of paper. As shown in FIG. 8, examples of the connected-components include the white area 171 between box 140 and box 130, the white area 172 between box 130 and box 110, and the white area 173 within box 110 but bounded by lines 111 and 121. Another example of the connected-components is the white area 174 within box 110, bounded by lines 121 and 113 and excluding those dark areas within box 110 (e.g., signature line 141, the barcode image 140, and other dark areas).

Finally, it is intended that a programmable parameter can be used to indicate the amount of imperfection that the algorithms would need to tolerate, which allows one or more small gaps or damages to be present on the border while still allowing document capture. Since this parameter is largely independent from the variety of forms, it is conceivable that one value can be chosen that satisfies the requirements of capturing multiple types of forms for the same customer. Similarly other universal parameters could be selected, such as output format, compression ratio, post-processing steps required, etc. that do not depend on the exact form to be scanned.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

The benefits, advantages, solutions to problems, and any element(s) that may cause any benefit, advantage, or solution to occur or become more pronounced are not to be construed as a critical, required, or essential features or elements of any or all the claims. The invention is defined solely by the appended claims.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ...a", "has ...a", "includes ...a", "contains ...a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way, but may also be configured in ways that are not listed.

It will be appreciated that some embodiments may be comprised of one or more generic or specialized processors (or "processing devices") such as microprocessors, digital signal processors, customized processors and field programmable gate arrays (FPGAs) and unique stored program instructions (including both software and firmware) that control the one or more processors to implement, in conjunction with certain non-processor circuits, some, most, or all of the functions of the method and/or apparatus described herein. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used.

Moreover, an embodiment can be implemented as a computer-readable storage medium having computer readable code stored thereon for programming a computer (e.g., comprising a processor) to perform a method as described and claimed herein. Examples of such computer-readable storage mediums include, but are not limited to, a hard disk, a CD-ROM, an optical storage device, a magnetic storage device, a ROM (Read Only Memory), a PROM (Programmable Read Only Memory), an EPROM (Erasable Programmable Read Only Memory), an EEPROM (Electrically Erasable Programmable Read Only Memory) and a Flash memory. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

## Claims

1. A method comprising:
capturing an image of a form having a barcode with a barcode reading arrangement, wherein the barcode reading arrangement comprises a solid-state imager having an array of photosensitive elements, a lens system operative to focus light reflected from the form onto the array of photosensitive elements in the solid-state imager;
storing (210) the image of the form captured by the solid-state imager to a memory; and **characterized by**:
finding (220) a reference box in the image of the form by traversing one of connected lines and connected edges in the image of the form;
processing (230) the image of the form to improve the image of the form to generate an improved image of the form by transforming the reference box to a rectangle in the improved image of the form when the reference box has a shape of a non-rectangular quadrilateral; and
processing (240) an improved image of the barcode in the rectangle in the improved image of the form generated from the step of processing the image of the form for decoding the barcode.

2. The method of claim 1, wherein the rectangle is a square.

3. The method of claim 1, wherein a step for finding the reference box in the image of the form comprises:
Finding (221) a start position in the image of the form; and
Traversing (222) one of connected lines and connected edges in the image of the form with a tracer beginning from the start position.

4. The method of claim 3, wherein a step for finding the start position in the image of the form comprises:
identifying a barcode candidate in the image of the form; and
selecting a positing in the neighborhood of the barcode candidate as the start position.

5. The method of claim 1, wherein a step for finding the reference box in the image of the form comprises:
traversing one of connected lines and connected edges in the image of the form with a tracer, wherein the tracer moves in a straight-line until the straight-line being traced encounters a second line, and the tracer continues to move along the second line.

6. The method of claim 1, wherein a step for finding the reference box in the image of the form comprises:
traversing one of connected lines and connected edges in the image of the form with a tracer continuously until the tracer returns to a position that has been previously traced by the tracer.

7. An apparatus comprising:
a solid-state imager (62) having an array of photosensitive elements for capturing an image of a form having a barcode;
a lens system (80) operative to focus light reflected from the form onto the array of photosensitive elements in the solid-state imager;
a memory (94) operative to store the image of the form captured by the solid-state imager; and **characterized by**:
a processor (90) configured for
finding (220) a reference box in the image of the form by traversing one of connected lines and connected edges in the image of the form,
processing (230) the image of the form to improve the image of the form to generate an improved image of the form by transforming the reference box to a rectangle when the reference box has a shape of a non-rectangular quadrilateral, and
processing (240) an improved image of the barcode in the rectangle in the improved image of the form generated from the step of processing the image of the form for decoding the barcode.

8. The apparatus of claim 7, wherein a step for finding the reference box in the image of the form comprises:
finding (221) a start position in the image of the form; and
traversing (222) one of connected lines and connected edges in the image of the form with a tracer beginning from the start position.

9. The apparatus of claim 8, wherein a step for finding the start position in the image of the form comprises:
identifying a barcode candidate in the image of the form; and
selecting a positing in the neighborhood of the barcode candidate as the start position.

10. The apparatus of claim 7, wherein a step for finding the reference box in the image of the form comprises:
traversing one of connected lines and connected edges in the image of the form with a tracer, wherein the tracer moves in a straight-line until the straight-line being traced encounters a second line, and the tracer continues to move along the second line.

11. The apparatus of claim 7, wherein a step for finding the reference box in the image of the form comprises:
traversing one of connected lines and connected edges in the image of the form with a tracer continuously until the tracer returns to a position that has been previously traced by the tracer.

## Patentansprüche

1. Verfahren, umfassend:
Erfassen eines Bildes einer Form, die einen Strichcode aufweist, mit einer Strichcodeleseanordnung, wobei die Strichcodeleseanordnung einen Festkörperbildgeber mit einer Anordnung von lichtempfindlichen Elementen und ein Linsensystem umfasst, das ausgeführt ist, um von der Form reflektiertes Licht auf die Anordnung von lichtempfindlichen Elementen in dem Festkörperbildgeber zu fokussieren;
Speichern (210) des Bildes der Form, das von dem Festkörperbildgeber erfasst wurde, in einem Speicher; und **gekennzeichnet durch**:
Finden (220) einer Referenzbox in dem Bild der Form durch Überqueren eines von verbundenen Linien und verbundenen Kanten in dem Bild der Form;
Verarbeiten (230) des Bildes der Form, um das Bild der Form zu verbessern, um ein verbessertes Bild der Form zu erzeugen, indem die Referenzbox in ein Rechteck in dem verbesserten Bild der Form umgewandelt wird, wenn die Referenzbox eine Gestalt eines nicht rechteckigen Vierecks hat; und
Verarbeiten (240) eines verbesserten Bildes des Strichcodes in dem Rechteck in dem verbesserten Bild der Form, das aus dem Schritt des Verarbeitens des Bildes der Form erzeugt wurde, zum Dekodieren des Strichcodes.

2. Verfahren nach Anspruch 1, wobei das Rechteck ein Quadrat ist.

3. Verfahren nach Anspruch 1, wobei ein Schritt zum Finden der Referenzbox in dem Bild der Form umfasst:
Finden (221) einer Startposition in dem Bild der Form; und
Überqueren (222) eines von verbundenen Linien und verbundenen Kanten in dem Bild der Form mit einem Sucher, beginnend von der Startposition.

4. Verfahren nach Anspruch 3, wobei ein Schritt zum Finden der Startposition in dem Bild der Form umfasst:
Identifizieren eines Strichcode-Kandidaten in dem Bild der Form; und
Auswählen einer Position in der Nachbarschaft des Strichcode-Kandidaten als die Startposition.

5. Verfahren nach Anspruch 1, wobei ein Schritt zum Finden der Referenzbox in dem Bild der Form umfasst:
Überqueren eines von verbundenen Linien und verbundenen Kanten in dem Bild der Form mit einem Sucher, wobei sich der Sucher in einer geraden Linie bewegt, bis die verfolgte gerade Linie auf eine zweite Linie trifft, und der Sucher sich weiter entlang der zweiten Linie bewegt.

6. Verfahren nach Anspruch 1, wobei ein Schritt zum Finden der Referenzbox in dem Bild der Form umfasst:
Kontinuierliches Überqueren eines von verbundenen Linien und verbundenen Kanten in dem Bild der Form mit einem Sucher, bis der Sucher zu einer Position zurückkehrt, die zuvor durch den Sucher verfolgt wurde.

7. Vorrichtung, umfassend:
einen Festkörperbildgeber (62) mit einer Anordnung von lichtempfindlichen Elementen zum Erfassen eines Bildes einer Form mit einem Strichcode;
ein Linsensystem (80), das ausgeführt ist, um von der Form reflektiertes Licht auf die Anordnung von lichtempfindlichen Elementen in dem Festkörperbildgeber zu fokussieren;
einen Speicher (94), der ausgeführt ist, um das von dem Festkörperbildgeber erfasste Bild der Form zu speichern; und **gekennzeichnet durch**:
einen Prozessor (90), der konfiguriert ist zum
Finden (220) einer Referenzbox in dem Bild der Form durch Überqueren eines von verbundenen Linien und verbundenen Kanten in dem Bild der Form,
Verarbeiten (230) des Bildes der Form, um das Bild der Form zu verbessern, um ein verbessertes Bild der Form zu erzeugen, indem die Referenzbox in ein Rechteck umgewandelt wird, wenn die Referenzbox eine Gestalt eines nicht rechteckigen Vierecks hat, und
Verarbeiten (240) eines verbesserten Bildes des Strichcodes in dem Rechteck in dem verbesserten Bild der Form, das aus dem Schritt des Verarbeitens des Bildes der Form erzeugt wurde, zum Dekodieren des Strichcodes.

8. Vorrichtung nach Anspruch 7, wobei ein Schritt zum Finden des Referenzfeldes in dem Bild der Form umfasst:
Finden (221) einer Startposition in dem Bild der Form; und
Überqueren (222) eines von verbundenen Linien und verbundenen Kanten in dem Bild der Form mit einem Sucher, beginnend von der Startposition.

9. Vorrichtung nach Anspruch 8, wobei ein Schritt zum Finden der Startposition in dem Bild der Form umfasst:
Identifizieren eines Strichcode-Kandidaten in dem Bild der Form; und
Auswählen einer Position in der Nachbarschaft des Strichcode-Kandidaten als die Startposition.

10. Vorrichtung nach Anspruch 7, wobei ein Schritt zum Finden der Referenzbox in dem Bild der Form umfasst:
Überqueren eines von verbundenen Linien und verbundenen Kanten in dem Bild der Form mit einem Sucher, wobei sich der Sucher in einer geraden Linie bewegt, bis die verfolgte gerade Linie auf eine zweite Linie trifft, und der Sucher sich weiter entlang der zweiten Linie bewegt.

11. Vorrichtung nach Anspruch 7, wobei ein Schritt zum Finden der Referenzbox in dem Bild der Form umfasst:
Kontinuierliches Überqueren eines von verbundenen Linien und verbundenen Kanten in dem Bild der Form mit einem Sucher, bis der Sucher zu einer Position zurückkehrt, die zuvor durch den Sucher verfolgt wurde.

## Revendications

1. Procédé comprenant :
la capture d'une image d'un formulaire ayant un code à barres avec un dispositif de lecture de code à barres, dans lequel le dispositif de lecture de code à barres comprend un imageur à semi-conducteurs ayant un ensemble d'éléments photosensibles, un système de lentille opératif pour focaliser de la lumière réfléchie à partir du formulaire sur l'ensemble d'éléments photosensibles dans l'imageur à semi-conducteurs ;
la mise en mémoire (210) de l'image du formulaire, capturée par l'imageur à semi-conducteurs, dans une mémoire ; et **caractérisé par** :
la recherche (220) d'un cadre de référence dans l'image du formulaire en parcourant l'une parmi des lignes reliées et bordures reliées dans l'image du formulaire ;
le traitement (230) de l'image du formulaire pour améliorer l'image du formulaire pour générer une image améliorée du formulaire en transformant le cadre de référence en un rectangle dans l'image améliorée du formulaire lorsque le cadre de référence a une forme d'un quadrilatère non-rectangulaire ; et
le traitement (240) d'une image améliorée du code à barres dans le rectangle dans l'image améliorée du formulaire générée à partir de l'étape de traitement de l'image du formulaire pour décoder le code à barres.

2. Procédé selon la revendication 1, dans lequel le rectangle est un carré.

3. Procédé selon la revendication 1, dans lequel une étape pour rechercher le cadre de référence dans l'image du formulaire comprend :
rechercher (221) une position de départ dans l'image du formulaire ; et
parcourir (222) l'une parmi des lignes reliées et bordures reliées dans l'image du formulaire avec un traceur en commençant à partir d'une position de départ.

4. Procédé selon la revendication 3, dans lequel une étape pour rechercher la position de départ dans l'image du formulaire comprend :
identifier un code à barres candidat dans l'image du formulaire ; et
sélectionner un postulant dans le voisinage du code à barres candidat en tant que position de départ.

5. Procédé selon la revendication 1, dans lequel une étape pour rechercher le cadre de référence dans l'image du formulaire comprend :
parcourir l'une parmi des lignes reliées et bordures reliées dans l'image du formulaire avec un traceur, dans lequel le traceur se déplace en ligne droite jusqu'à ce que la ligne droite tracée rencontre une deuxième ligne, et le traceur continue de se déplacer le long de la deuxième ligne.

6. Procédé selon la revendication 1, dans lequel une étape pour rechercher le cadre de référence dans l'image du formulaire comprend :
parcourir l'une parmi des lignes reliées et bordures reliées dans l'image du formulaire avec un traceur, en continu, jusqu'à ce que le traceur revient dans une position ayant été précédemment tracée par le traceur.

7. Appareil comprenant :
un imageur à semi-conducteurs (62) ayant un ensemble d'éléments photosensibles pour capturer une image d'un formulaire ayant un code à barres ;
un système de lentille (80) opératif pour focaliser de la lumière réfléchie à partir du formulaire sur l'ensemble d'éléments photosensibles dans l'imageur à semi-conducteurs ;
une mémoire (94) opérative pour mettre en mémoire l'image du formulaire capturée par l'imageur à semi-conducteurs ; et **caractérisé par** :
un processeur (90) configuré pour
rechercher (220) un cadre de référence dans l'image du formulaire en parcourant l'une parmi des lignes reliées et bordures reliées dans l'image du formulaire,
traiter (230) l'image du formulaire pour améliorer l'image du formulaire pour générer une image améliorée du formulaire en transformant le cadre de référence en un rectangle lorsque le cadre de référence a une forme d'un quadrilatère non-rectangulaire, et
traiter (240) une image améliorée du code à barres dans le rectangle dans l'image améliorée du formulaire générée à partir de l'étape de traitement de l'image du formulaire pour décoder le code à barres.

8. Appareil selon la revendication 7, dans lequel une étape pour rechercher le cadre de référence dans l'image du formulaire comprend :
rechercher (221) une position de départ dans l'image du formulaire ; et
parcourir (222) l'une parmi des lignes reliées et bordures reliées dans l'image du formulaire avec un traceur en commençant à partir de la position de départ.

9. Appareil selon la revendication 8, dans lequel une étape pour rechercher la position de départ dans l'image du formulaire comprend :
identifier un code à barres candidat dans l'image du formulaire ; et
sélectionner un postulant dans le voisinage du code à barres candidat en tant que position de départ.

10. Appareil selon la revendication 7, dans lequel une étape pour rechercher le cadre de référence dans l'image du formulaire comprend :
parcourir l'une parmi des lignes reliées et bordures reliées dans l'image du formulaire avec un traceur, dans lequel le traceur se déplace en ligne droite jusqu'à ce que la ligne droite tracée rencontre une deuxième ligne, et le traceur continue de se déplacer le long de la deuxième ligne.

11. Appareil selon la revendication 7, dans lequel une étape pour rechercher le cadre de référence dans l'image du formulaire comprend :
parcourir l'une parmi des lignes reliées et bordures reliées dans l'image du formulaire avec un traceur, en continu, jusqu'à ce que le traceur revient dans une position ayant été précédemment tracée par le traceur.
